# EUROPEAN PATENT APPLICATION

(11) **EP 2 460 696 A1**
(43) Date of publication of application: **06.06.2012**
(21) Application number: 11191632.6
(22) Date of filing: 01.12.2011
(51) Int. Cl.: B60R 21/2165

(54) **Improved tear seams for airbag covers**

(30) Priority: 02.12.2010 US 958875
(71) Applicant: Faurecia Interior Systems, Inc., Auburn Hills, MI 48326 (US)
(72) Inventor: Iseman, Robert, Auburn Hills, MI Michigan 48326 (US)
(74) Representative: Yeadon, Mark

(57) **Abstract**

A covering for use with and instrument panel includes a non-visible tear seam for forming an airbag deployment opening. The tear seam may be formed by cold-knife scoring a stress-riser into the inner surface of the covering at an angle of 85 degrees or less with respect to the inner surface. The angled tear seam may reduce read-through on the show surface of the instrument panel by providing supporting material directly beneath the stress-riser after the scoring.

## Description

### TECHNICAL FIELD

The present invention relates generally to vehicle airbag coverings and tear seams for airbag coverings. Aspects of the invention relate to a covering, to a method, to an instrument panel and to a vehicle.

### BACKGROUND OF THE INVENTION

Inflatable airbags are safety devices commonly used in automobile interiors to help protect occupants in the event of a collision. They are most often installed near the front of the vehicle cabin as part of a steering wheel assembly or as part of an instrument panel, for example, to help prevent a driver or passenger from colliding with the steering wheel, windshield, or other interior components during the rapid vehicle deceleration that occurs during in a collision. Airbags may also be installed in other parts of the vehicle cabin such as beside the driver and passenger seating areas - e.g., near doors, windows, structural pillars, etc. - to help protect occupants when lateral forces are experienced during a collision. Airbags generally operate by inflating or deploying when triggered by a control signal and/or sensor that indicate that the vehicle is experiencing conditions indicative of a collision that is severe enough to warrant the supplemental protection of an airbag. When triggered, the airbag is typically filled with a rapidly expanding gas so that it inflates to provide a more forgiving barrier between occupants and the hard surfaces of the vehicle interior in a small fraction of a second.

Due to their utilitarian nature and one-time only emergency use, vehicle airbags are typically concealed from view, usually residing in a compartment behind or beneath a panel or other trim component that is more visually appealing. While deploying, an airbag must make its way into the vehicle cabin from its compartment, thus requiring an opening or passage between the compartment and cabin. Of course, for purposes of concealment, such an opening is desired only at the time of airbag deployment and not at any other time. Various techniques may be used to provide such an opening on demand. For example, an airbag door may be provided that covers the deployment opening during normal vehicle operation and that opens or otherwise uncovers the deployment opening when the airbag is triggered for inflation. However, airbag doors can be unsightly in a vehicle interior, even when decorated to match its surroundings, because their shape or outline may interrupt an otherwise smooth or continuous contour on a highly visible surface, such as the instrument panel or dashboard. Therefore, it may also be desirable to conceal the airbag door, where provided.

Another way to provide a deployment opening on demand is to form the opening while the airbag is deploying. For instance, the panel or other trim component behind which the airbag is concealed can be selectively breached during airbag deployment to form the opening. To accomplish this, the panel or component may be deliberately weakened at locations corresponding to the perimeter of the desired opening by providing a reduced material thickness, perforations, scoring, or other stress concentrators at these locations. When an airbag is triggered for deployment from behind a panel that has been deliberately weakened in this manner, the substantial forces generated by its rapid inflation can cause the panel to breach in the weakened areas, thereby forming an opening through which the airbag can deploy into the vehicle cabin. Again for aesthetic purposes, it may be desirable that any material thickness changes, perforations, scoring, or other such functional features in the panel be hidden from view.

It is an aim of the present invention to improve upon known airbag coverings and deployment techniques. Other aims and advantages of the invention will be apparent from the following description, claims and drawings.

### SUMMARY OF THE INVENTION

According to one aspect of the invention for which protection is sought there is provided a covering for use over a vehicle airbag comprising an outer surface that faces toward the interior of the vehicle, an opposite inner surface and a tear seam formed in the inner surface of the covering, the tear seam comprising a slit that forms an angle of about 85 degrees or less with the inner surface, wherein the tear seam is arranged to form a deployment opening through the covering during airbag inflation when the covering is installed in the vehicle.

In an embodiment, the slit comprises a surface end at the inner surface of the covering and a material end between the inner and outer surfaces. The covering material may be continuous directly beneath at least a portion of the material end of the slit.

In an embodiment, the outer surface is a show surface and the tear seam is not visible at the show surface.

The covering may comprise a skin layer that includes the outer surface and the inner surface. Alternatively, or in addition, the covering may comprise a skin layer that includes the outer surface and an inner layer that includes the inner surface. The slit may extend at least partially into the skin layer.

In an embodiment, the inner layer comprises a polymer foam material. The skin layer and the inner layer may be attached together.

In an embodiment, the slit is continuous along the length of the tear seam.

In an embodiment, the angle is substantially constant along the length of the tear seam. The angle may range from about 15 degrees to about 75 degrees.

According to another aspect of the invention for which protection is sought there is provided a covering for use over a vehicle airbag comprising an outer surface that faces toward the interior of the vehicle, an opposite inner surface and a tear seam formed in the inner surface of the covering, the tear seam comprising a stress-riser having a surface end at the inner surface of the covering and a material end between the inner and outer surfaces, wherein supporting material is provided directly beneath at least a portion of the material end of the stress-riser and the tear seam is arranged to form a deployment opening through the covering during airbag inflation when the covering is installed in the vehicle.

In an embodiment, the stress-riser comprises a slit.

The stress-riser may form an angle of about 85 degrees or less with the inner surface. In an embodiment, the angle ranges from about 15 degrees to about 75 degrees.

In an embodiment, the surface and material ends of the stress-riser are substantially parallel and the surface end does not lie directly beneath the material end.

In an embodiment, the stress-riser has an outward bias.

The covering may comprise a skin layer that includes the outer surface and an inner layer that includes the inner surface. The material end of the stress-riser may be in the skin layer and the supporting material may include the entire thickness of the inner layer.

According to a further aspect of the invention for which protection is sought there is provided an instrument panel or a vehicle comprising the covering of any one or more of the above aspects or embodiments.

According to a still further aspect of the invention for which protection is sought, there is provided a method of forming a tear seam in a vehicle airbag covering, comprising the steps of providing a covering having an inner surface and a pre-determined deployment opening location, providing a cutting tool, and cutting into and along the inner surface of the covering with the cutting tool at a location corresponding to the pre-determined deployment opening location, wherein the cutting tool is oriented at an angle of about 85 degrees or less with the inner surface during the cutting step.

In an embodiment, the cutting tool comprises a blade.

In an embodiment, the covering includes an airbag region and the blade includes a tip that points away from the airbag region during the cutting step.

In an embodiment, the blade is not heated.

In an embodiment, no molten material is formed during the cutting step.

In an embodiment, the cutting step includes forming a slit in the covering such that essentially no material is removed from the covering.

In an embodiment, the covering comprises an inner layer that includes the inner surface, and an outer layer, and the cutting step comprises cutting partially into the outer layer with the cutting tool.

In embodiments of the invention, a covering for use over a vehicle airbag is provided. The covering may include an outer surface, an opposite inner surface, and a tear seam. The outer surface of the covering faces toward the interior of the vehicle and the tear seam is formed in the inner surface of the covering. The tear seam comprises a slit that forms an angle of about 85 degrees or less with the inner surface and is arranged to form a deployment opening through the covering during airbag inflation when the covering is installed in the vehicle.

In further embodiments of the invention a covering for use over a vehicle airbag is provided. The covering may include an outer surface, an opposite inner surface, and a tear seam. The outer surface of the covering faces toward the interior of the vehicle and the tear seam is formed in the inner surface of the covering. The tear seam comprises a stress-riser having a surface end at the inner surface of the covering and a material end between the inner and outer surfaces. Supporting material is provided directly beneath at least a portion of the material end of the stress-riser. The tear seam is arranged to form a deployment opening through the covering during airbag inflation when the covering is installed in the vehicle.

In still further embodiments of the invention a method of forming a tear seam in a vehicle airbag covering is provided. The method may include the steps of providing a covering layer having an inner surface and a pre-determined deployment opening location and providing a cutting tool. The method may further include cutting into and along the inner surface of the covering with the cutting tool at a location corresponding to the pre-determined deployment opening location. The cutting tool is oriented at an angle of about 85 degrees or less with the inner surface during the step of cutting.

Within the scope of this application it is envisaged that the various aspects, embodiments, examples, features and alternatives set out in the preceding statements of invention, in the claims and/or in the following description and drawings may be taken independently or in any combination thereof. For example, features described in connection with one embodiment are applicable to all embodiments, unless there is incompatibility of features.

### BRIEF DESCRIPTION OF THE DRAWINGS

One or more embodiments of the invention will hereinafter be described, by way of example only, with reference to the appended drawings, wherein like designations denote like elements, and wherein:
FIG. 1 is a cutaway view of an instrument panel embodying one form of the invention with a non-visible tear seam arranged over an airbag module;
FIG. 2 is a partial cross-sectional view of the instrument panel and air bag module of

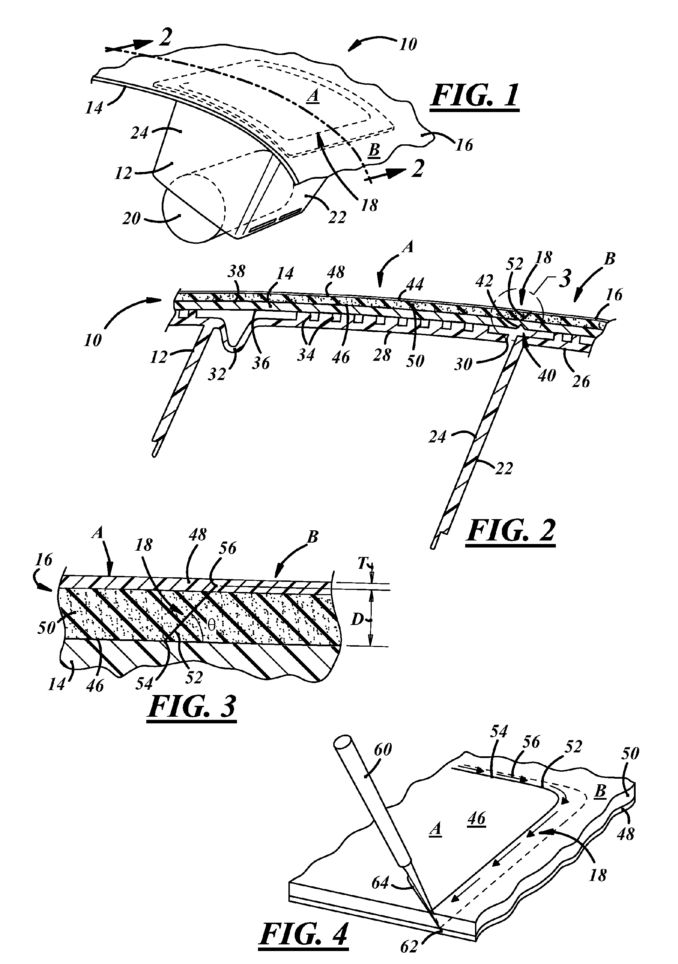

FIG. 1 showing a covering disposed over an instrument panel substrate;
FIG. 3 is an enlarged cross-sectional view of a portion of the covering of FIG. 2 showing a tear seam including an angled stress-riser; and
FIG. 4 illustrates an example of a covering and a cutting tool forming the tear seam in the covering.

### DETAILED DESCRIPTION OF EMBODIMENT(S)

Providing weakened portions in an airbag-concealing panel or covering such that a deployment opening is formed during airbag inflation can be accomplished in a variety of ways. The selected techniques may depend on a variety of factors, such as the strength of the component materials, cost, complexity of the components, ease of manufacturing, or the resulting component aesthetics, to name a few. For example, where it is desired to form the deployment opening through a high-strength or high-stiffness material, the thickness of the material may require significant reduction at the desired opening perimeter to allow the airbag to break through. Other panel materials may have sufficiently low strength or have a thickness that is sufficiently low that an air bag can breach the material in the absence of additional weakening, though weakened areas may still be desirable to control the exact location of the formed opening. In some airbag applications, the airbag may be concealed behind multiple layers of materials, each layer requiring different types or levels of weakening in order to best form aligned deployment openings in each layer.

Among the techniques available is the forming of notches or locally reduced thickness areas at locations in the panel or covering corresponding to portions of the perimeter of the desired deployment opening. This type of weakening can be provided at the time the panel or covering is manufactured, or it may be added afterward by a secondary operation. For example, a notch may be molded into a molded plastic panel, or it may be formed in the panel after molding by cutting or otherwise reshaping the panel material. Depending on some of the factors mentioned above, some of the various methods that may be used to selectively weaken a panel or covering in a secondary operation include blade cutting or scoring, where the blade is a hot-knife or a cold-knife; ultrasonic cutting or scoring; laser cutting, scoring, perforation, or micro-perforation; other types of mechanical perforation; or milling. Other methods may be used as well.

Most of these techniques result in a discernible mark or line that is visible in the modified panel when viewed from the side of the panel on which the operation is performed. Therefore, these panel or covering modifications are typically performed on a non-visible surface - i.e., on the surface of the panel or covering opposite the surface that faces the interior of the vehicle cabin. In this manner, a concealing panel or covering for an airbag may be configured such that a deployment opening is formed through the panel at a pre-determined location during airbag deployment, the pre-determined location additionally being concealed from view in the vehicle cabin.

It is sometimes the case, however, that locating weakening cuts, scores, or notches on the underside of a covering is not enough to completely conceal their presence. Some coverings may experience a visual read-through or witness mark on the visible surface. For example, the same weakening that makes it possible for an airbag to breach the panel or covering may also cause localized variation in certain material behaviors, such as expansion and contraction, sagging, or reactions to applied stresses, for example. This may particularly be the case with coverings that are relatively thin and/or have relatively low stiffness such as some flexible, decorative skins that are used in automobile interiors, some examples of which are described below.

As used herein, the term "tear seam" refers to any of the above-described structures, or similar ones, that are intended to weaken any portion of a vehicle component for the purpose of allowing an airbag to break, breach, split, divide, or otherwise make its way through or around the component during airbag deployment, or at least occupy some of the same space the tear seam occupied before airbag deployment.

Referring now to FIG. 1, a cut-away view of a vehicle instrument panel 10 is shown with an airbag module 12 installed therebeneath. The portion of instrument panel 10 shown is the passenger side of the instrument panel. In this embodiment, instrument panel 10 includes substrate 14 and covering 16. As described in more detail below, instrument panel 10 may include several layers of materials that may each include its own separately weakened portions provided for the formation of airbag deployment openings.

Tear seam 18, shown as a hidden line in FIG. 1, is one such weakened portion, and is formed in covering 16 so that it is not visible from the vehicle cabin when the instrument panel 10 is installed in a vehicle. As indicated, tear seam 18 is generally U-shaped in this embodiment with the U-shape having a bottom and two sides corresponding in location with underlying airbag module components. This, along with certain other features and methods of forming the tear seam 18 will be discussed in greater detail below. FIG. 1 also shows instrument panel 10 divided into two regions: airbag region A, and non-airbag region B. Region A is generally the area of the instrument panel and all of its components that are within the area where deployment openings will be formed when the airbag inflates. Region B is generally all of the instrument panel area outside of region A. These regions are indicated in all subsequent figures for clarity and descriptive purposes.

Airbag module 12 is any component or device that includes an airbag arranged to deploy into the cabin of a vehicle when inflated. In this embodiment, airbag module 12 is a passenger airbag (PAB) module and includes an airbag canister 20 and a housing 22. The airbag canister 20 in this particular embodiment includes a folded or otherwise stowed airbag housed therein and is arranged and oriented such that when the airbag inflates, it extends away from the canister, toward the instrument panel 10, and toward the interior of the vehicle. Housing 22 is attached to the underside of instrument panel 10 and supports the airbag canister 20 beneath instrument panel 10. It may also include a chute 24 that helps to guide and control the direction of the airbag during deployment. This is of course only one version of an airbag module, while other modules may not include a canister or a separate housing and may include other types of components to compliment the functionality of the airbag.

Referring to FIG. 2, the instrument panel 10 and airbag module 12 is described in further detail. It is noted that neither FIG. 2 nor any of the other figures provided are necessarily to scale, and layer thicknesses may be exaggerated for explanatory purposes. Shown here is a cross-section of instrument panel 10 and airbag module 12 of FIG. 1 with the airbag canister omitted. Finishing out the description of the airbag module 12, housing 22 further includes a frame 26 and an airbag door 28 in addition to chute 24. In this example, the housing 22 is a one-piece component such that the chute 24, frame 26, and door 28, are formed integrally in a molding process such as injection molding. Generally, the frame 26 and door 28 lie in the same plane or along the same curve, and the frame 26 surrounds the door 28, forming an opening or gap 30 on three sides of the door 28. The fourth side of the door 14 includes a hinge 32 that is integrally formed with and attached to the frame 26. Chute 24, as shown in FIG. 2, extends from the underside of frame 26 and generally circumscribes the door 28. When an air bag disposed within the chute 24 is inflating, the chute 24 guides the air bag toward the door 28. The housing 22 in this embodiment also includes a plurality of ribs 34 extending from the frame and door that may be used to attach the housing to the instrument panel 10 via vibration welding or other suitable attachment methods. Housing 22 is given by way of example and can be constructed in a variety of ways and attached to the instrument panel in a variety of ways. In some embodiments, housing 22 does not include a door, for example, and the housing is primarily a chute that is attached to the instrument panel from beneath to guide the airbag toward the panel.

As already noted, instrument panel 10 includes substrate 14 and covering 16 in the illustrated embodiment. Substrate 14 is the main component of instrument panel 10 to which other components may be attached and/or extend from for functional or aesthetic purposes, for example. A typical instrument panel substrate 14 may be constructed from a variety of materials depending on several design and cost considerations. Examples of substrate materials include rigid or semi-rigid thermoplastic materials such as polyolefin-based materials like thermoplastic olefins (TPOs) or polypropylene (PP). Other thermoplastic materials such as ABS or ABS/PC may also be used to form substrate 14. Thermoplastic materials may be filled or unfilled, depending on factors such as the required strength or stiffness of the substrate. Suitable filler materials typically include short or long glass fibers or mineral-based fillers. Polypropylene having filler including long glass fibers in an amount of 20-30% by weight is one example of a suitable substrate material, but other polymeric or non-polymeric materials may be used.

Substrate 14 includes inner and outer surfaces 36 and 38 and, in this embodiment, also includes a tear seam 40, shown in cross-section. As shown, the airbag module 12 is attached to the inner surface 36. In this embodiment, inner surface 36 may also be referred to as the bottom or lower surface due to its generally horizontal orientation, but some portions of instrument panels and their components may be oriented in other directions. Outer surface 38 in this particular embodiment is covered by covering 16 and is therefore not visible to vehicle occupants, though it faces in a direction toward the vehicle cabin. Tear seam 40 in this example includes a V-shaped cross-section formed in inner surface 36 that may form a continuous notch or groove 42 that extends along the inner surface 36 to at least partially define a pre-determined location for a substrate deployment opening through which the underlying airbag can deploy. The V-shaped groove 42 extends only partially through the thickness of the substrate material in this embodiment. In other embodiments, the groove may be discontinuous and/or may extend all the way through the thickness of the substrate material in certain areas. The location of the groove 42 corresponds generally to a perimeter of the underlying chute 24, housing frame 26, and/or airbag door 28. It may lie inside or outside any of these perimeters or may be in alignment with one or more of them. Though not shown here, tear seam 40 may be shaped similarly to the underlying airbag module components 24-28 in plan view, extending along at least a portion of the perimeter of the pre-determined location of the substrate deployment opening. For example, tear seam 40 may extend along a path corresponding to typically three or four sides of the rectangular shapes of components 24-28, where four sides represents a full rectangle and three sides represents a U-shape, similar to tear seam 18 as depicted in FIG. 1. Tear seam 40 is only one example of a substrate tear seam, and it may be formed in nearly any shape and size by many of the techniques previously listed and may include cross-sectional shapes other than grooves or notches.

Covering 16 overlies substrate 14 and, in this particular embodiment, is generally provided for decorative purposes, as it includes the visible surface of the instrument panel 10. Covering 16 is typically, but not always, fabricated to be generally more flexible than substrate 14, either by making it from lower modulus materials, by making it thinner than the substrate, or both. Examples of covering materials will be presented below. Covering 16 may be adhesively attached to the outer surface 38 of the substrate 14 with a suitable adhesive, or it may be attached by other techniques such as having its edges wrapped around edges of the substrate 14 and attached to the inner surface 36, for example. In one embodiment, a thin layer of a spray-on adhesive formulated to be compatible with the substrate material and the facing covering material is sufficient for attachment.

Covering 16 includes an outer surface 44 that faces toward the interior of the vehicle cabin, an inner surface 46 that lies adjacent substrate 14, and tear seam 18, shown here in cross-section. In the particular embodiment of FIG. 2, covering 16 is a bi-layer material that includes a skin layer 48 and an inner layer 50. Skin layer 48 provides the outer surface 44 of the covering, which in this case is the visible or show surface of the instrument panel. It may be formed from any of a variety of materials typically used in automobile interiors, including, but not limited to, thermoplastic olefins (TPOs), thermoplastic elastomers (TPEs), plasticized polyvinylchloride (PVC), thermoplastic polyurethanes (PUR), leather, simulated leather, or any combination thereof. Material selection may be based on a number of factors, including the desired type of texture for outer surface 44, the tactile "feel" of the material, cost, processability, etc. Skin layer 48 may range in thickness from about 0.2 mm to about 1.0 mm, and advantageously ranges from about 0.5 mm to about 0.6 mm. The thickness of layer 48 may depend on material choice and other factors, such as whether covering 16 is a multi-layer component as shown in this example. For example, in a different embodiment, covering 16 may include only a single layer of material, such as skin layer 48, in which case the thickness may be selected near the higher end of the range to provide sufficient material thickness for the tear seam. Covering layer 16 may also be an intermediate layer of the overall instrument panel and have one or more other layers disposed over it.

Inner layer 50, as provided in the illustrated embodiment, lies between substrate 14 and skin layer 48. Inner layer 50 may be included to provide a different tactile "feel" to the covering 16 and to the overall instrument panel than if the skin layer were attached directly to the more rigid substrate 14. Layer 50 may also be included as an intermediate layer that aids in adhesion of the skin layer 48 to the instrument panel by providing a material that can be sufficiently adhered to both the skin layer 48 and the substrate. Layer 50 may be separately adhered, coextruded, laminated, or otherwise attached to skin layer 48 to form covering 16 as a unitary component, or layer 50 may be a separate layer altogether that can include its own tear seam. Inner layer 50 can include other functionality as well, such as leveling uneven areas in the underlying substrate, helping to conceal substrate tear seams, and providing generally more structure to coverings that utilize skin layers that may be too thin and/or flexible to be practical for use in a manufacturing environment.

In this embodiment, inner layer 50 provides the inner surface 46 of the covering, which is adjacent and facing the substrate 14. It may be formed from any of a variety of materials, but polymeric foam materials may be advantageous to provide a soft but resilient feel to the instrument panel. Materials for inner layer 50 may include nearly any type of polymer foam. Polyolefin-based foams may be used, for example, including foam materials based on polyethylene (PE), polypropylene (PP), TPOs, or alloys or blends thereof, such as a PE/PP alloy. Other types of polymer foams include polyurethane foam, acrylic-based foams, and polyester foams, to name a few. Some of these materials may be cross-linked for additional resilience, and they may include open- or closed-cell structures. Other non-polymeric materials such as felt or non-synthetic textile fibers may be used as well. Certain types of tear seams disclosed herein may benefit from polymer foams that have rigidities on the upper end of the range typically used in automotive instrument panels. Inner layer 50 may range in thickness from about 0.5 mm up to about 5.0 mm or higher, depending on the desired "feel" of the instrument panel, for example. A more typical inner layer thickness may be chosen to provide an overall covering thickness that ranges from about 1.0 mm to about 4.0 mm. For example, in one embodiment, covering 16 has an overall thickness of about 2.0 mm, where the skin layer 48 is about 1.0 mm thick and the inner layer 50 is about 1.0 mm thick. In another embodiment, the skin layer is about 0.5 mm thick, and the inner layer is about 3.0 mm thick, so that the overall covering thickness is 3.5 mm. Of course, these are non-limiting examples, as there are several suitable combinations of layer thicknesses.

Covering 16 is not limited to the bi-layer configuration shown and described. As already noted, skin layer 48 can itself be the covering in some instances. In addition, covering 16 may include more than two layers to provide a more complex tactile feel to the instrument panel, to include a bulk layer of inexpensive material, or for other reasons. The following description of tear seams applies to all instrument panel coverings, regardless of the number of layers.

FIG. 3 is an enlarged view of a portion of FIG. 2, and tear seam 18 may be further described with reference to FIG. 3. Tear seam 18 may be formed in covering 16 by any of the previously mentioned techniques, and its cross-section includes a stress-riser 52 formed in the covering 16, and more specifically, in the inner surface 46 of covering 16. The stress-riser 52 in this embodiment is in the form of a slit that may be continuous and extend along inner surface 46 to at least partially define a pre-determined location for a covering deployment opening through which the underlying airbag can deploy. As used herein, a slit broadly describes a thin cut formed in the component in which substantially no material was removed. Stress-riser 52 extends only partially through the total thickness of the covering material. A residual wall thickness T (also referred to as RWT) is shown as the minimum local wall thickness in the tear seam region, where T can vary along the tear seam. Generally, because covering 16 is decorative in nature, embodiments including stress-risers that extend through the entire thickness of the covering material are not common, but they are possible. For example micro-perforations or other weakening features having dimensions on a scale too small to visually detect may be used. In another embodiment, the stress-riser 52 may be discontinuous as it extends along a path in inner surface 46 to form the tear seam 18. The shape and the location of the tear seam 18 correspond to respective perimeters or outlines of the underlying airbag components 24-28 (see FIG. 2) and to the location of the substrate tear seam. It may lie inside or outside any of these features or may be in alignment with one or more of them.

As noted, stress-riser 52 in the illustrated embodiment is in the form of a slit. The slit 52 includes many notable characteristics. Besides its resulting RWT, additional features may be used to describe stress-riser 52, some of the features being particular to the slit form. Residual wall thickness T, a depth D, a bias angle θ, and a bias direction may be characteristics of several types of stress-risers, including slits, notches, grooves, perforations, etc. The RWT as described above and shown in FIG. 3 may range from about 0.2 mm to about 0.6 mm and depends somewhat on the thickness of skin layer 48. It is limited on the lower end of the range by a read-through phenomenon in which the tear seam is visible as a witness line in certain instances. The RWT is limited on the upper end of the range by strength - i.e., if the RWT is too high, the airbag may not be able to split covering 16 at the tear seam.

In cross-section, the stress-riser 52 extends into the covering material from a surface end 54 (located at inner surface 46) to a material end 56 (located within the thickness of skin layer 48 in this embodiment) to define a depth D of the slit, measured generally perpendicular to the covering layer or layers. Depth D is generally based on the overall thickness of the covering and the RWT, the RWT being a factor that may have a greater effect on the function of the tear seam. For example, depth D is generally less that the overall covering thickness by about 0.2 mm to about 0.6 mm.

Stress-riser 52 forms bias angle θ with the substrate 14, as shown, where θ is between 0 and 90 degrees. As shown, bias angle θ is approximately 45 degrees. In addition, stress-riser 52 is directional, meaning that it may be angled in one of two directions. As shown in FIG. 3, stress-riser 52 extends into the covering 16 from its surface end 54 to material end 56 in a direction pointing away from airbag region A and toward non-airbag region B. Another way to describe the direction of bias angle θ in FIG. 3 is to say that the stress-riser is biased away from the airbag region or that it has an outward bias. If the bias angle θ is in the opposite direction, it may be said that the stress-riser is biased in a direction toward the airbag region or that it has an inward bias. It is possible for this direction or bias to change along the length of the tear seam 18, but the direction may be advantageously maintained for the length of the tear seam 18. An outward bias such as that shown in FIG. 3 may facilitate tear seam function, but an inward bias is also possible.

Some characteristics of stress-riser 52 may be particular to its form as a slit, though there may be other types of stress-risers that have the following characteristics. For example, where the stress-riser 52 is in the form of a slit as shown, the stress-riser has no appreciable thickness; i.e., the materials on either side of the slit 52 may be in facial contact with one another. Additionally, where the stress-riser is in the form of a slit as shown, there is no appreciable radius at the material end 56 of the slit - i.e., the end of the slit is sharp rather than rounded. These characteristics, especially when combined with certain bias angles, may be useful to reduce or eliminate the previously discussed read-through phenomenon. The interplay of some of the characteristics may be selectively controlled to minimize read-through while maximizing functionality of the tear seam, and possibly reducing material usage and/or cost.

For example, stress-risers formed at θ = 90° can be particularly susceptible to read-through on the outer surface 44 of the covering, especially in bi-layer applications that also include a foam inner layer and especially where the foam inner layer is relatively thick. This type of thick inner layer configuration may be desirable from an aesthetic and/or tactile perspective due to the potential for a plush feel on the instrument panel. But spacing the skin layer of a covering a relatively large distance from the underlying substrate with a vertical stress-riser formed through the entire foam inner layer thickness and into the skin layer can cause the skin layer to be relatively unsupported at the tear seam, compared to other portions of the skin layer, potentially causing read-through. One approach to reduce read-through is to increase the RWT, but in some cases it is necessary to increase the RWT to the full thickness of the skin layer to eliminate read-through, substantially prohibiting inclusion of the tear seam 18 in the skin layer, even where necessary.

Stress-risers that are formed in covering 16 with a bias angle can help alleviate or possibly eliminate the read-through problem in several ways. Forming the stress-riser 52 at an angle of less than 90°, as shown in FIG. 3 has the effect of providing support material directly beneath the portion of the covering that includes the minimum RWT. Stated another way, located directly beneath material end 56 of the stress-riser 52 is uncompromised or continuous covering material that can fully support the localized thin wall section. Experimentation has shown that a bias angle θ as high as 75°, and possibly as high as 85°, is effective to eliminate read-through at RWT values that show significant levels of read-through at θ = 90°. In addition, experimentation has shown that a bias angle θ as low as 15°, and possibly as low as 5°, is effective as well. An advantageous range for bias angle θ is from about 45° to about 85°, as the shallower angles require more overall covering area to form.

Forming the stress-riser 52 at a bias angle as described may also allow the incorporation of lower RWT values due to the additional support provided beneath the RWT area. For example, where a covering requires an RWT value of 0.5 mm to prevent read-through when the stress-riser is formed at bias angle of θ = 90°, forming the stress-riser at a bias angle of 85° or less may allow an RWT value of 0.4 mm or less, which in turn may allow the use of thinner skin layers.

Providing the stress-riser in the form of a slit as shown in FIG. 3 may be especially useful when forming the stress-riser at a bias angle other than 90° due to the thickness of the slit being substantially zero. For example, while other types of stress-risers such as grooves, notches, or perforations may be formed with a bias angle as described, these types of stress-risers may typically have material removed or have areas within the covering material that include voids. Any space provided between material portions on either side of a stress-riser may cause a loss of the additional material support directly beneath the material end of the stress-riser that is provided with an angled slit as described.

An additional useful feature of having the stress-riser formed as a slit includes the near-zero radius material end 56 of the slit. For example, a slit that is provided in the materials of covering 16 may typically be formed using a sharp blade to cut into the materials while substantially removing no material. Other techniques such as laser scoring, ultrasonic scoring, and milling, generally remove material and/or rely on heat to form the score line by localized melting or vaporization of the material. Molten material formed at the area of minimum RWT generally causes the material end (corresponding to element 56 in FIG. 3) of the stress-riser to be rounded or include a radius. In essence, a radius at the material end of the stress-riser causes it to be less of a stress-riser - i.e., the forces generated at the tear seam during airbag deployment are distributed along the rounded or radiused material end of the stress-riser. Where the stress-riser is in the form of a slit having no discernible radius at its material end, the same airbag forces result in a significantly higher stress level at the tear seam, providing improved tear seam function. This also allows for achieving the same tear seam function at higher RWT values.

Thus, providing a tear seam having a stress-riser in the form of a slit with the slit formed at a bias angle of 85° or less effectively broadens the useful RWT window and the useful covering material thickness ranges, while also providing a tear seam structure that can reduce or eliminate the read-through phenomenon. While depicted in the figures for use with a PAB module, the tear seams disclosed herein are useful with all sorts of airbags and air-curtains in any part of the vehicle.

A method of forming a tear seam in an airbag covering is also described. The method generally includes the steps of providing a covering and a cutting tool, and cutting into the covering with the cutting tool at an angle of about 85 degrees or less with respect to the inner surface of the covering. All of the above described coverings can have tear seams formed in them using this method, regardless of the number of layers, types of materials, or types and shapes of scoring or cutting the covering material.

As depicted in FIG. 4, the covering 16 may be provided horizontally with its outer surface face down and its inner surface 46 face up. Of course, the covering does not have to be positioned horizontally and may be positioned in any number of orientations. In the embodiment depicted, covering 16 has a bi-layer construction including skin layer 48 and inner layer 50. As previously described, the covering 16 may include a pre-determined location for a deployment opening for an airbag, generally located near a boundary between airbag region A and non-airbag region B. The cutting tool may include a blade 60 as shown, including a tip 62 and a cutting edge 64. It may be a cold blade (e.g., ambient temperature) or a hot blade (e.g., heated to a temperature that may melt polymeric material at the cutting edge of the blade). A cold blade may be advantageous in order to perform cold-knife scoring on covering 16 and to provide a near-zero radius at the tip 62 of the blade as it cuts the covering, thereby providing some of the advantages outlined above. Other types of cutting tools maybe be used, including other types of mechanical cutting tools such as milling tools, and further including laser cutting tools, though laser cutting tools can be sensitive to some process variables - such as the color of the covering material - that do not affect mechanical cutting tools such as blades.

As shown in FIG. 4, the selected cutting tool 60 cuts into and along the inner surface 46 at a location corresponding to the pre-determined deployment opening location - i.e., the desired location of tear seam 18. While cutting, the cutting tool 60 is oriented at an angle 85 degrees or less with respect to inner surface 46, as shown. Stress-riser 52 is produced by the cutting, in this case in the form of a slit. Where a cold knife is utilized as the cutting tool, the depth of the slit corresponds with the location of the tip 62 of the blade during cutting, the tip of the blade extending partially into the skin layer 48 in the bi-layer material of the illustrated embodiment. As with the previously described figures, stress-riser 52 in this case is shown having an outward bias. In other words, where the cutting tool is a blade or other similar cutting tool having a tip, the tip is pointed away from airbag region A and toward non-airbag region B while cutting. Of course, the angle of the cut can be biased in either an outward or inward direction, depending on tear seam performance or other practical manufacturing considerations, for example.

It is to be understood that the foregoing is a description of one or more embodiments of the invention that are provided by way of example only. The invention is not limited to the particular embodiment(s) disclosed herein, but rather is defined solely by the claims below. Furthermore, the statements contained in the foregoing description relate to particular embodiments and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art. All such other embodiments, changes, and modifications are intended to come within the scope of the appended claims.

As used in this specification and claims, the terms "for example," "for instance," "such as," and "like," and the verbs "comprising," "having," "including," and their other verb forms, when used in conjunction with a listing of one or more components or other items, are each to be construed as open-ended, meaning that that the listing is not to be considered as excluding other, additional components or items. Other terms are to be construed using their broadest reasonable meaning unless they are used in a context that requires a different interpretation.

This application claims priority from US Serial No. 12/958,875 filed 2nd December 2010, the entire contents of which are expressly incorporated by reference herein.

## Claims

1. A covering for use over a vehicle airbag, comprising:
an outer surface that faces toward the interior of the vehicle;
an opposite inner surface; and
a tear seam formed in the inner surface of the covering, the tear seam comprising a slit that forms an angle of about 85 degrees or less with the inner surface, wherein the tear seam is arranged to form a deployment opening through the covering during airbag inflation when the covering is installed in the vehicle.

2. A covering as claimed in claim 1, wherein the slit comprises a surface end at the inner surface of the covering and a material end between the inner and outer surfaces, and the covering material is continuous directly beneath at least a portion of the material end of the slit.

3. A covering as claimed in claim 1 or claim 2, wherein the outer surface is a show surface and the tear seam is not visible at the show surface.

4. A covering as claimed in any preceding claim, comprising a skin layer that includes the outer surface and the inner surface.

5. A covering as claimed in any of claims 1 to 3, comprising:
a skin layer that includes the outer surface; and
an inner layer that includes the inner surface, wherein the slit extends at least partially into the skin layer.

6. A covering as claimed in claim 5, wherein the inner layer comprises a polymer foam material.

7. A covering as claimed in any preceding claim, wherein the slit is continuous along the length of the tear seam.

8. A covering as claimed in claim 7, wherein:
the angle is substantially constant along the length of the tear seam; and/or
the angle ranges from about 15 degrees to about 75 degrees.

9. An instrument panel or a vehicle having a covering as claimed in any preceding claim.

10. A method of forming a tear seam in a vehicle airbag covering, comprising:
(a) providing a covering having an inner surface and a pre-determined deployment opening location;
(b) providing a cutting tool; and
(c) cutting into and along the inner surface of the covering with the cutting tool at a location corresponding to the pre-determined deployment opening location;
wherein the cutting tool is oriented at an angle of about 85 degrees or less with the inner surface during step (c).

11. A method as claimed in claim 10, wherein the cutting tool comprises a blade.

12. A method as claimed in claim 11, wherein the covering comprises an airbag region and the blade comprises a tip that points away from the airbag region during step (c).

13. A method as claimed in claim 11 or claim 12, comprising carrying out the cutting step (c) without heating of the blade.

14. A method as claimed in any of claims 10 to 13, wherein step (c) includes forming a slit in the covering such that substantially no material is removed from the covering during step (c).

15. A method as claimed in any of claims 10 to 14, wherein the covering comprises an inner layer that includes the inner surface, and an outer layer, and step (c) comprises cutting partially into the outer layer with the cutting tool.
